# FASCICULE DE BREVET EUROPEEN

(11) **EP 2 627 990 B1**
(45) Date de publication et mention de la délivrance du brevet: **06.04.2016**
(21) Numéro de dépôt: 11832092.8
(22) Date de dépôt: 10.10.2011
(51) Int. Cl.: G01N 21/35

(54) **PROCEDE PERMETTANT DE DETECTER ET DE MESURER LES EMISSIONS D'ESPECES POLLUANTES NON IDENTIFIEES AU DEPART AU VOISINAGE DE SITES INDUSTRIELS ET/OU AGRICOLES ET/OU STRATEGIQUES**
VERFAHREN ZUR DETEKTION UND MESSUNG DER EMISSIONEN VON ZUNÄCHST NICHT IDENTIFIZIERTEN UMWELTSCHÄDLICHEN SPEZIES IN DER NÄHE INDUSTRIELLER UND/ODER LANDWIRTSCHAFTLICHER UND/ODER STRATEGISCH WICHTIGER STANDORTE
METHOD FOR DETECTING AND MEASURING THE EMISSIONS OF INITIALLY NON-IDENTIFIED POLLUTING SPECIES IN THE VICINITY OF INDUSTRIAL AND/OR AGRICULTURAL AND/OR STRATEGIC SITES

(30) Priorité: 11.10.2010 FR 1058229
(43) Date de publication de la demande: 21.08.2013
(73) Titulaire: Noveltis, 31670 Labège (FR)
(72) Inventeur: BRU, Richard, F-31520 Ramonville Saint Agne (FR)
(74) Mandataire: Richebourg, Michel François
(86) Numéro de dépôt international: PCT/FR2011/052362
(87) Numéro de publication internationale: WO 2012/049415

(56) Documents cités:
- EP-A2- 0 401 599
- CN-Y- 201 194 005
- DE-A1- 4 015 623
- JP-A- 2 051 046
- WONDRACZEK L ET AL: "Mid-infrared laser-tomographic imaging of carbon monoxide in laminar flames by difference frequency generation", COMBUSTION AND FLAME, ELSEVIER SCIENCE PUBLISHING CO., INC., NEW YORK, NY.; US, vol. 138, no. 1-2, 1 juillet 2004 (2004-07-01), pages 30-39, XP004517397, ISSN: 0010-2180, DOI: DOI:10.1016/J.COMBUSTFLAME.2004.03.011
- KEVIN C. GROSS ET AL: "Remote Identification and Quantification of Industrial Smokestack Effluents via Imaging Fourier-Transform Spectroscopy", ENVIRONMENTAL SCIENCE & TECHNOLOGY, vol. 44, no. 24, 15 décembre 2010 (2010-12-15), pages 9390-9397, XP055022677, ISSN: 0013-936X, DOI: 10.1021/es101823z
- R. HARIG ET AL: "Hyperspectral sensor for analysis of gases in the atmosphere (HYGAS)", PROCEEDINGS OF SPIE, vol. 7695, 1 janvier 2010 (2010-01-01), pages 76950B-76950B-9, XP055022682, ISSN: 0277-786X, DOI: 10.1117/12.852770
- HARIG R ET AL: "Scanning infrared remote sensing system for identification, visualization, and quantification of airborne pollutants", PROCEEDINGS OF THE SPIE - THE INTERNATIONAL SOCIETY FOR OPTICAL ENGINEERING SPIE-INT. SOC. OPT. ENG. USA, vol. 4574, 2002, pages 83-94, XP002650615, ISSN: 0277-786X
- CUCCOLI F ET AL: "INFRARED TOMOGRAPHIC SYSTEM FOR MONITORING THE TWO-DIMENSIONAL DISTRIBUTION OF ATMOSPHERIC POLLUTION OVER LIMITED AREAS", IEEE TRANSACTIONS ON GEOSCIENCE AND REMOTE SENSING, IEEE SERVICE CENTER, PISCATAWAY, NJ, US, vol. 38, no. 4, PART 02, 1 juillet 2000 (2000-07-01), pages 1922-1935, XP000937148, ISSN: 0196-2892, DOI: DOI:10.1109/36.851774

## Description

### DOMAINE D'APPLICATION DE L'INVENTION

La présente invention a trait au domaine de la pollution de l'environnement et concerne plus particulièrement un procédé de mesure permettant d'identifier et de quantifier la présence d'espèces polluantes sur un site sensible afin d'obtenir une mesure précise des émissions de ces espèces polluantes.

### DESCRIPTION DE L'ART ANTERIEUR

La pollution qui désigne la dégradation d'un biotope par l'introduction de substances, entraînant une perturbation plus ou moins importante de l'écosystème, a un impact très important sur la santé et dans la biosphère comme en témoigne l'exposition aux polluants qui transforme le climat de la terre et son écosystème, en entraînant l'apparition de maladies inconnues jusqu'alors ou des migrations de certaines espèces si elles ne peuvent s'adapter à leur nouvel environnement biophysique. Les préoccupations environnementales conduisent ainsi les gouvernements à prendre de plus en plus des mesures plus radicales pour limiter l'empreinte écologique polluante des populations humaines.

Dans ce contexte, la demanderesse a constaté que les émissions de gaz et de particules, c'est à dire de polluants émis sans contrôle au voisinage de certains sites industriels et/ou agricoles (raffineries, unités de traitement des déchets et élevages d'animaux à grande échelle), constituent aussi un problème environnemental important. Pour prévenir d'éventuels attentats chimiques ou autres actes terroristes, il est également de plus en plus nécessaire de surveiller les sites stratégiques tels que ceux répertoriés par la défense nationale, en détectant dès le départ les premières émissions de gaz chimiques, biologiques et/ou bactériologiques.

Il devient donc maintenant inéluctable de pouvoir identifier, localiser et quantifier ces espèces polluantes, notamment dans des émissions diffuses, étant entendu qu'une amélioration des connaissances des émissions de ces espèces polluantes près des sites industriels et/ou agricoles et/ou stratégiques conduira à une meilleure prévision des épisodes de pollution photochimique (formation d'ozone troposphérique principalement générée par les concentrations d'oxydes d'azote et/ou de composés organiques volatils).

Cependant, bien que les émissions d'espèces polluantes sur les sites industriels et/ou agricoles et/ou stratégiques aient pris une importance relative non négligeable, voire majoritaire dans certains cas, elles ne sont pour autant jamais contrôlées en tant que telles notamment lors qu'elles sont diffuses car elles sont très difficiles à détecter et encore plus à mesurer en raison de l'étendue de la source d'émission, de la topologie de l'espace étudié, de leur variabilité temporelle, et de leur dépendance aux conditions météorologiques lors de la mesure.

L'article, "Remote Identification and Quantification of Industrial Smokestack Effluents via Imaging Fourier-Transform Spectroscopy" (Kevin C Gross et al; Environmental Science & Technology; Vol. 44; Nr 24, pages 9390 - 9397; 2010-12-15) (figures 1-3; Table 1) divulgue un procédé d'identification et de quantification à distance des espèces polluantes, par exemple C02, S02, N0, HCL, CO s'échappant d'une cheminée industrielle, par spectro-imagerie à transformation de Fourier dans le domaine du moyen-infrarouge (1800-3000 cm-i), c.à.d. de manière passive, par l'utilisation des émissions thermiques des gaz polluants. Le procédé comprend une méthode d'inversion de transfert radiatif sur le base d'un modèle de fumée monocouche pour estimer la température et les densités de colonnes q(i) des polluants pour chaque pixel du spectre au-dessus du cheminée. Sur la figure la prise de vue est indiquée par un trait tireté du site d'observation jusqu'au centre de la cheminée.

Il existe aussi des systèmes assurant une surveillance de la pollution issue de la combustion industrielle qui font le choix d'un procédé par mesure active permettant de sélectionner quelques longueurs d'ondes, à partir d'une hypothèse sur les espèces cibles à mesurer tel le monoxyde de carbone dégagé par une flamme laminaire, comme le système décrit dans le document WONDRACZEK L ET AL "Mid-infrared laser-tomographie imaging of carbon monoxide in laminar flames by différence frequency generation", COMBUSTION AND FLAME, ELSEVIER SCIENCE PUBLISHING CO., INC., NEW YORK, NY.; US, vol. 138, n°. 1-2, 1 juillet 2004 (2004-07-01), pages 30-39, XP004517397, ISSN: 0010-2180, 001: 001:10.1.

Outre le fait de devoir disposer d'un dispositif expérimental très complexe avec des émetteurs de sources laser (ou autres) et des récepteurs disposés à proximité et autour de la flamme laminaire, un tel système présente un inconvénient majeur dans la mesure où il ne permet de contrôler que la distribution d'une ou quelques espèces polluantes bien identifiées au départ, comme le monoxyde de carbone dans le cas décrit. Il ne permet donc pas de détecter a posteriori des espèces poluantes si elles n'ont pas été spécifiquement identifiées au départ.

C'est pour cette raison qu'à la connaissance de la demanderesse, il n'existe à ce jour, aucun procédé viable capable de détecter et de quantifier les émissions de toutes sortes d'espèces polluantes pouvant émaner autour de sites industriels et/ou agricoles et/ou stratégiques et encore moins lorsque ces émissions sont diffuses et que lesdites espèces polluantes ne sont pas, au départ, identifiables sur le site.

### DESCRIPTION DE L'INVENTION

Pour pallier cet inconvénient de détection des émissions d'espèces polluantes au voisinage de sites industriels et/ou agricoles et/ou stratégiques, la demanderesse a mené des recherches visant, selon un cahier des charges préétabli, à concevoir un procédé non seulement susceptible de détecter les émissions d'espèces polluantes non identifiées au départ au voisinage de sites industriels et/ou agricoles et/ou stratégiques mais également d'isoler et localiser ces espèces polluantes détectées tout en offrant des mesures quantitatives de celles-ci.

Selon l'invention, le procédé permettant de détecter, de localiser et de mesurer quantitativement les émissions d'espèces polluantes au voisinage de sites industriels et/ou agricoles et/ou stratégiques consiste :
- à installer près d'un site industriel et/ou agricole, au moins un appareil de télédétection par spectro-imagerie infrarouge, susceptible d'acquérir de manière passive, c'est à dire sans utiliser d'émetteur, des informations spectrales sur différentes espèces polluantes présentes sur le site afin de les détecter, de les identifier, de les localiser et d'obtenir une quantification des concentrations desdites différentes espèces polluantes identifiées,
- à opérer plusieurs prises de vues autour du site exploré pour échantillonner spatialement le champ 3D des espèces polluantes et assurer une localisation spatiale de ces dernières,
- à mesurer les concentrations d'espèces polluantes identifiées par la méthode d'inversion de transfert radiatif,
- et à réaliser une tomographie 3D des émissions d'espèces polluantes identifiées.

Le procédé de l'invention utilisant un appareil de télédétection par spectro-imagerie infrarouge qui, selon un mode de réalisation préférentielle de l'invention, sera du type à transformation de Fourier, a pour grand avantage d'effectuer sur le site une mesure infra-rouge hyperspectrale avec une couverture large bande et à très haute résolution spectrale de manière passive c'est à dire sans utiliser d'émetteur ce qui permet de distinguer et d'isoler les espèces polluantes émises au voisinage de sites industriels et/ou agricoles et/ou stratégiques et qui n'ont pas été identifiées au départ.

Le procédé de l'invention offre la liberté de ne pas être contraint dès le départ de choisir les longueurs d'onde à partir d'une connaissance a priori des polluants cibles, comme dans le cas des systèmes de mesure active évoqués ci-dessus. Il est ainsi possible de détecter a posteriori sur le site exploré, des espèces polluantes dont la présence n'était pas supposée au départ. Ces avantages notables du procédé de l'invention permettent au système le mettant en oeuvre sur un site à explorer, de s'adresser à des utilisateurs ne connaissant pas forcément quel(s) polluant(s) sont au-dessus des seuils critiques .

De plus, le procédé de l'invention ne se contente pas ainsi de mesurer des mélanges d'espèces polluantes en général comme c'est le cas pour d'autres solutions qui ne peuvent alors pas faire la distinction entre les espèces chimiques et sont obligées de faire des hypothèses sur le mélange de ces substances.

De plus, la précision de la mesure selon le procédé de l'invention, couplée à la résolution spectrale de l'appareil, permet d'accéder à une quantification des concentrations d'espèces polluantes, avec, pour certaines espèces identifiées, des seuils de détection compatibles avec de faibles taux d'émissions, ce qui est nécessaire pour la détection des émissions d'espèces polluantes.

Une variante préférentielle du procédé de l'invention propose d'assurer un balayage temporel des prises de vues permettant d'obtenir, au-delà de la détection proposée par d'autres solutions et grâce à la méthode de tomographie 3D et à la mesure des concentrations par inversion de transfert radiatif, une quantification à fine résolution des distributions spatio-temporelles des concentrations des espèces polluantes sur le site sensible.

En fonction de l'importance des variations de l'évolution temporelle du champ d'émissions d'espèces polluantes d'un site sensible exploré, soit la vitesse de balayage temporel sera plus rapide soit le balayage sera alors assuré en continu.

De même, en fonction de l'importance des variations de l'évolution temporelle du champ d'émissions d'espèces polluantes d'un site exploré, un même appareil de télédétection pourra être déplacé, via par exemple un véhicule terrestre ou un véhicule aéroporté, autour dudit site sensible si les variations sont faibles. Si les variations s'avéraient assez importantes, plusieurs appareils de télédétection seront alors installés autour du site pour réaliser plusieurs prises de vues simultanées afin d'obtenir une localisation spatiale plus fine des espèces polluantes identifiées.

Une caractéristique préférentielle de l'invention consiste à intégrer dans la restitution des émissions, la prise en compte de la dynamique atmosphérique. Il est en effet primordial dans certaines conditions de tenir compte de certains mécanismes d'interaction en corrigeant l'information radiométrique fournie par l'appareil en fonction des paramètres biophysiques de l'atmosphère environnante telles que les conditions météorologiques et/ou les réactions chimiques engendrées.

On comprend que le procédé de l'invention, qui vient d'être ci-dessus décrit, l'a été en vue d'une divulgation plutôt que d'une limitation. Bien entendu, divers aménagements, modifications et améliorations pourront être adaptés, sans pour autant sortir du cadre de l'invention tel que définie dans les revendications.

## Revendications

1. Procédé permettant de détecter, de localiser et de mesurer quantitativement les émissions diffuses d'espèces polluantes non identifiées au départ au voisinage de sites industriels et/ou agricoles et/ou stratégiques, comprenant les étapes suivantes :
- apporter près d'un site industriel et/ou agricole, au moins un appareil de télédétection par spectro-imagerie infrarouge, susceptible d'acquérir de manière passive, c'est à dire sans utiliser d'émetteur, des informations spectrales sur différentes espèces polluantes présentes sur le site afin de les détecter, de les identifier, de les localiser et d'obtenir une quantification des concentrations desdites différentes espèces polluantes identifiées,
- opérer plusieurs prises de vues autour du site exploré pour échantillonner spatialement le champ 3D des espèces polluantes et assurer une localisation spatiale de ces dernières,
- mesurer les concentrations d'espèces polluantes identifiées par la méthode d'inversion de transfert radiatif,
- et réaliser une tomographie 3D des émissions d'espèces polluantes identifiées.

2. Procédé selon la revendication 1, **CARACTERISE EN CE QU'**il consiste à utiliser un appareil de télédétection par spectro-imagerie infrarouge à transformation de Fourier.

3. Procédé selon la revendication 1, **CARACTERISE EN CE QU'**il consiste à assurer un balayage temporel des prises de vues.

4. Procédé selon la revendication 1, **CARACTERISE EN CE QU'**il consiste à intégrer dans la restitution des émissions d'espèces polluantes identifiées, la prise en compte de la dynamique atmosphérique.

5. Procédé selon à revendication 1, **CARACTERISE EN CE QU'**il consiste à déplacer autour du site exploré l'appareil assurant la télédétection par spectro-imagerie infrarouge de manière à obtenir le balayage de plusieurs prises de vues pour échantillonner spatialement le champ 3D d'espèces polluantes.

6. procédé selon la revendication 1, **CARACTERISE EN CE QU'**il consiste à installer autour du site exploré plusieurs appareils assurant la télédétection par spectre-imagerie infrarouge de manière à obtenir un balayage de plusieurs prises de vues simultanées pour échantillonner spatialement le champ 3D d'espèces polluantes.

7. Procédé selon la revendication 3, **CARACTERISE EN CE QUE** le balayage temporel des prises de vues est assuré en continu.

8. Procédé selon la revendication 3, **CARACTERISE EN CE QU'**il consiste à monter sur un véhicule, l'appareil assurant la télédétection par spectro-imagerie infrarouge pour le déplacer autour du site exploré.

9. Procédé selon les revendications 3 et 8, **CARACTERISE EN CE QUE** le véhicule assurant le déplacement du susdit appareil de télédétection, est un véhicule terrestre.

10. Procédé selon les revendications 3 et 8, **CARACTERISE EN CE QUE** le véhicule assurant le déplacement du susdit appareil de télédétection, est un véhicule aéroporté.

## Patentansprüche

1. Verfahren zum Erkennen, Lokalisieren und quantitativen Messen der diffusen Emissionen von zu Beginn nicht identifizierten umweltschädlichen Arten in der Umgebung von industriellen und/ oder landwirtschaftlichen und/ oder strategischen Standorten, die folgenden Schritte umfassend:
- Beibringen zumindest eines Infrarotspektroskopie-Fernerfassungsgerätes in die Nähe eines industriellen und/ oder landwirtschaftlichen Standortes, das in passiver Form, also ohne Verwendung eines Senders, spektrale Informationen über verschiedene umweltschädliche Arten aufnehmen kann, die am Standort vorhanden sind, um sie zu erkennen, zu identifizieren, zu lokalisieren und um eine Quantifizierung der Konzentrationen der besagten verschiedenen identifizierten umweltschädlichen Arten zu erhalten,
- Vollziehen mehrerer Aufnahmen rund um den erkundeten Standort zur räumlichen Probenahme des dreidimensionalen Feldes der umweltschädlichen Arten und zur Gewährleistung einer räumlichen Lokalisierung letzterer,
- Messen der Konzentrationen identifizierter umweltschädlicher Arten durch das Verfahren der Umkehr des Wärmeaustausches durch Strahlung,
- und
Erzeugen einer dreidimensionalen Tomographie der Emissionen von identifizierten umweltschädlichen Arten.

2. Verfahren nach Anspruch 1, **dadurch gekennzeichnet, dass** es darin besteht, ein Fourier-Transformations-Infrarotspektroskopie-Fernerfassungsgerät zu verwenden.

3. Verfahren nach Anspruch 1, **dadurch gekennzeichnet, dass** es darin besteht, eine zeitliche Abtastung der Aufnahmen vorzunehmen.

4. Verfahren nach Anspruch 1, **dadurch gekennzeichnet, dass** es darin besteht, die Berücksichtigung der atmosphärischen Dynamik in die Restitution der Emissionen von identifizierten umweltschädlichen Arten zu integrieren.

5. Verfahren nach Anspruch 1, **dadurch gekennzeichnet, dass** es darin besteht, das Infrarotspektroskopie-Fernerfassungsgerät derart um den erkundeten Standort zu bewegen, um die Abtastung mehrerer Aufnahmen zu erhalten, um räumlich Proben vom dreidimensionalen Feld umweltschädlicher Arten zu nehmen.

6. Verfahren nach Anspruch 1, **dadurch gekennzeichnet, dass** es darin besteht, um den erkundeten Standort herum mehrere Infrarotspektroskopie-Fernerfassungsgeräte aufzustellen, um eine Abtastung mehrerer simultaner Aufnahmen zu erhalten, um räumlich Proben vom dreidimensionalen Feld umweltschädlicher Arten zu nehmen.

7. Verfahren nach Anspruch 3, **dadurch gekennzeichnet, dass** das zeitliche Abtasten der Aufnahmen ununterbrochen durchgeführt wird.

8. Verfahren nach Anspruch 3, **dadurch gekennzeichnet, dass** es darin besteht, das Infrarotspektroskopie-Fernerfassungsgerät auf einem Fahrzeug anzubringen, um es um den erkundeten Standort zu bewegen.

9. Verfahren nach den Ansprüchen 3 und 8, **dadurch gekennzeichnet, dass** das Fahrzeug, mit dem das oben genannte Fernerfassungsgerät bewegt wird, ein terrestrisches Fahrzeug ist.

10. Verfahren nach den Ansprüchen 3 und 8, **dadurch gekennzeichnet, dass** das Fahrzeug, mit dem das oben genannte Fernerfassungsgerät bewegt wird, ein luftgestütztes Fahrzeug ist.

## Claims

1. Method for detecting, locating and measuring quantitatively diffuse emissions of initially unidentified pollutant species in the vicinity of industrial and/or agricultural and/or strategic sites, comprising the following steps:
- providing near an industrial and/or agricultural site, at least one infrared spectro-imaging remote detection apparatus, suitable for acquiring passively, i.e. without using an emitter, spectral information on different pollutant species present on the site so as to detect, identify, locate same and obtain a quantification of the concentrations of said different identified pollutant species,
- taking a plurality of images around the site under study to spatially sample the 3D field of the pollutant species and carry out a spatial positioning thereof,
- measuring the concentrations of identified pollutant species by the radiative transfer inversion method,
- and
carrying out a 3D tomography of the emissions of identified pollutant species.

2. Method according to claim 1, **characterised in that** it consists of using a Fourier transform infrared spectro-imaging remote detection apparatus.

3. Method according to claim 1, **characterised in that** it consists of carrying out a time sweep of the images.

4. Method according to claim 1, **characterised in that** it consists of integrating in the reproduction of the identified pollutant species emissions, inclusion of the atmospheric dynamics.

5. Method according to claim 1, **characterised in that** it consists of moving around the site under study the apparatus carrying out infrared spectro-imaging remote detection so as to obtain the sweep of a plurality of images to spatially sample the 3D field of pollutant species.

6. Method according to claim 1, **characterised in that** it consists of setting up around the site under study a plurality of apparatuses carrying out infrared spectro-imaging remote detection so as to obtain a sweep of a plurality of simultaneous images to spatially sample the 3D field of pollutant species.

7. Method according to claim 3, **characterised in that** the time sweep of the images is carried out continuously.

8. Method according to claim 3, **characterised in that** it consists of mounting on a vehicle, the apparatus carrying out infrared spectro-imaging remote detection in order to move same around the site under study.

9. Method according to claims 3 and 8, **characterised in that** the vehicle moving said remote detection apparatus is a terrestrial vehicle.

10. Method according to claims 3 and 8, **characterised in that** the vehicle moving said remote detection apparatus is an airborne vehicle.
